# EUROPEAN PATENT SPECIFICATION

(11) **EP 3 061 148 B1**
(45) Date of publication and mention of the grant of the patent: **27.09.2017**
(21) Application number: 14781913.0
(22) Date of filing: 10.10.2014
(51) Int. Cl.: H01M 10/0525, H01M 10/0567, H01M 10/0568, H01M 10/42

(54) **FLAME RETARDANT FOR ELECTROLYTES FOR BATTERIES**
FLAMMHEMMSTOFF FÜR BATTERIEELEKTROLYTEN
RETARDATEUR DE FLAMME POUR DES ÉLECTROLYTES DE BATTERIES

(30) Priority: 21.10.2013 EP 13189533
(43) Date of publication of application: 31.08.2016
(73) Proprietor: BASF SE, 67056 Ludwigshafen am Rhein (DE)
(72) Inventor: HOLUB, Nicole, 68167 Mannheim (DE); GEYER, Karolin, 68163 Mannheim (DE); SCHMITZ, Rene, 68163 Mannheim (DE); CHESNEAU, Frederick Francois, 68789 St. Leon-Rot (DE); SCHMIDT, Michael, 64342 Seeheim-Jugenheim (DE)
(74) Representative: BASF IP Association
(86) International application number: PCT/EP2014/071752
(87) International publication number: WO 2015/058976

(56) References cited:
- JP-A- 2013 152 825
- US-A1- 2010 047 695
- US-B1- 6 200 701

## Description

The present invention is in the field of flame retardants in electrolytes which can be used for batteries such as lithium ion batteries.

Batteries, in particular lithium ion batteries, are currently among the most promising ways of storing energy for mobile applications such as portable electronic devices, electric tools, or electric vehicles. Typically, batteries comprise an electrolyte which comprises an organic solvent. These solvents tend to be flammable such that batteries can represent a safety hazard.

US 6 210 840 B1 discloses a flame-retardant electrolytic solution containing alkyl alkoxy phosphonates.

US 6 096 447 discloses phosphonate additives for nonaqueous electrolyte in alkali metal electrochemical cells.

JP 2013 /152 825 discloses phosphonate additives as electrolyte additive to suppress decoposition of an electrolyte at high temperatures, wherein the phosphonate accounts for less than 1.5 wt.-% of the electrolyte composition.

US 6 200 701 B1 discloses phosphonates as SEI additives for electrochemical cells wherein the phosphonates are employed in very small amounts.

An object of the present invention is to provide an electrolyte composition with reduced flammability. The present invention in addition aims at providing an electrolyte composition which renders batteries with good electrochemical performance, such as high reversible capacity and low decrease of capacity upon repeated cyclization. Another object of the present invention is to provide an electrolyte composition which quickly self-extinguishes even though it has a low content of flame retardant.

These objects could be achieved by an electrolyte composition comprising
a) at least 3 wt.-% of the electrolyte composition of at least one compound of general structure (I) 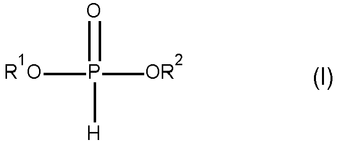 R¹ and R² are independent from each
   other methyl, ethyl, *n*-propyl or *n*-butyl
   and
b) at least one anode film forming additive.

The present invention also relates to the use of the compound of general structure (I) as flame retardant in an electrolyte composition.

The present invention also relates to a battery comprising the electrolyte composition according to the present invention.

Preferred embodiments of the present invention can be found in the description and the claims. Combinations of different embodiments fall within the scope of the current invention.

In general an electrolyte composition is a substance or a mixture with high ionic conductivity. Typically, electrolyte compositions show ionic conductivities at room temperature of at least 10⁻⁵ S/cm⁻², preferably at least 10⁻⁴ S/cm⁻², and more preferably at least 10⁻³ S/cm⁻².

According to the present invention the electrolyte composition contains at least one compound of general structure (I). These compounds include dimethyl phosphite, ethyl methyl phosphite, methyl *n*-propyl phosphite, *n*-butyl methyl phosphite, diethyl phosphite, ethyl *n*-proply phosphite, ethyl *n*-butyl phosphite, di-*n*-propyl phosphite, *n*-butyl *n*-propyl phosphite, or di-*n*-butyl phosphite.

In the presence of at least one compound of general structure (I) the flammability is much lower than without it. The flammability of an electrolyte composition is typically determined by measuring the self-extinguishing time (SET). This value can be measured by soaking up the electrolyte into a non-flammable carrier, for example a glass fiber filter. After ignition of the thus soaked carrier, for example by a lighter, the time is recorded until the flame ceases burning without external influence. The time is divided by the weight of the electrolyte composition which has been soaked into the carrier to arrive at the SET, typically reported in seconds per gram (s/g). The smaller this value the lower is the flammability of an electrolyte composition. In order to obtain reproducible SET values, it is preferabe to keep the soaked carrier in a place with controlled air flow, for example in a hood with an air flow of from 610 to 660 m³/h. Preferably, the soaked carrier is surrounded by a glass box with an opened top to minimize turbulences or variations of the air flow around the soaked carrier. The dimension of the box should be large enough to avoid a direct influence of the walls on the burning process, for example a width of 60 cm, a depth of 40 cm, and a height of 100 cm. When the electrolyte composition contains at least one compound of general formula (I), the SET values generally decrease measurably. They usually decrease by more than 50 % in comparison to an electrolyte composition without a compound of general formula (I).

It is preferable that the vapor pressure of the compound of general formula (I) in the electrolyte composition is high. In this way, the presence of a high concentration of the compound of general formula (I) in the gas phase in case of a fire is ensured acting efficiently against the burning process. It is, therefore, preferred if R¹ and R² in general formula (I) in sum do not contain more than four carbon atoms. It is also preferred that R¹ and R² are independently methyl or ethyl. More preferably, both R¹ and R² are methyl groups. In this case, the at least one compound of general formula (I) is dimethyl phosphite.

The at least one compound of general formula (I) is so efficient that low or very low amounts of the at least one compound of general formula (I) is sufficient to achieve a good SET value. A significant reduction of the SET value in comparison to the electrolyte composition without flame retardant can already be observed when the at least one compound of general formula (I) constitutes at least 3 wt.-% of the electrolyte composition. Preferably, it constitutes at least 5 wt.-% of the electrolyte composition. Generally, not more than 15 wt.-% of the electrolyte composition are needed, preferably not more than 10 wt.-% of the electrolyte composition. Generally, it is favorable to use as little of the at least one compound of general formula (I) as possible to obtain a certain SET value.

An anode film forming additive is a compound which decomposes on an anode to form a passivation layer on the anode which prevents degradation of the electrolyte and/or the anode. In this way, the lifetime of a battery is significantly extended. An anode in the context of the present invention is understood as the negative electrode of a battery. Preferably, the anode has a reduction potential of 1 Volt or less against lithium such as a lithium intercalating graphite anode. In order to determine if a compound qualifies as anode film forming additive, an electrochemical cell can be prepared comprising a graphite electrode and a lithium-ion containing cathode, for example lithium cobalt oxide, and an electrolyte containing a small amount of said compound, typically from 0.1 to 3 wt.-% of the electrolyte composition, preferably from 0.5 to 2 wt.-% of the electrolyte composition, more preferably from 1 to 1.5 wt.-% of the electrolyte composition. Upon application of a voltage between anode and cathode, the differential capacity of the electrochemical cell is recorded between 0.5 V and 2 V. If a significant differential capacity is observed during the first cycle, for example -150 mAh/V at 1 V, but not or essentially not during any of the following cycles in said voltage range, the compound can be regarded as anode film forming additive.

The at least one anode film forming additive preferably comprises compounds which polymerize upon contact with elemental lithium, compounds which are reduced by elemental lithium, oxalate comprising compounds, or mixtures thereof. Oxalate comprising compounds are preferred.

The at least one anode film forming additive which polymerizes upon contact with elemental lithium typically contains a carbon-carbon double bond. Examples include unsaturated carbonates such as vinylene carbonate, vinyl ethylene carbonate, and allyl ethyl carbonate, vinyl acetate, divinyl adipate, acrylic acid nitrile, 2-vinyl pyridine, maleic anhydride, methyl cinnamate, allyl phosphonates, vinyl-containing silane compounds such as vinyl trimethyl silane, vinyl silicates such as vinyl triethoxymethyl silicate, or mixtures thereof. Also included are molecules which polymerize after forming a carbon-carbon double bond in contact with elemental lithium for example by elimination. An example is fluoroethylene carbonate. Preferred are unsaturated carbonates, more preferred is vinylene carbonate.

The at least one anode film forming additive which is reduced by elemental lithium includes sulfites such as ethylene sulfite, sultones such as propane sultone, alkyl nitrates such as iso-propylnitrate, alkyl nitrites such as *tert.*-butyl nitrite, halogenated esters and lactones such as α-bromo-γ-butyrolactone, alkyl halogen carbonates such as methyl chloroformate, phenol derivatives such as methyl carboxyphenol, imides like succinic acid imide, isocyanates such as phenylisocyanate, or mixtures thereof.

Oxalate comprising anode film forming additives include lithium oxalate, oxalato phosphate such as lithium tetrafluoro (oxalato) phosphate, oxalato borates, or mixtures thereof. Oxalato borates are preferred. Oxalato borates include dimethyl oxalate, lithium bis(oxalato) borate, ammonium bis(oxalato) borate, lithium difluoro (oxalato) borate, or mixtures thereof. More preferred are bis(oxalato) borate comprising compounds, in particular lithium bis(oxalato) borate.

Preferred examples of the electrolyte composition according to the invention include an electrolyte composition comprising
a) from 5 to 10 wt.-% of the electrolyte composition a compound of general structure (I) in which R¹ and R² are independently methyl or ethyl and
b) from 2 to 3 wt.-% of the electrolyte composition an unsaturated carbonate,
an electrolyte composition comprising
a) from 5 to 10 wt.-% of the electrolyte composition a compound of general structure (I) in which R¹ and R² are independently methyl or ethyl and
b) from 2 to 3 wt.-% of the electrolyte composition an oxalate comprising compound,
an electrolyte composition comprising
a) from 5 to 10 wt.-% of the electrolyte composition dimethylphosphite and
b) from 1 to 3 wt.-% of the electrolyte composition an unsaturated carbonate,
an electrolyte composition comprising
a) from 5 to 10 wt.-% of the electrolyte composition dimethylphosphite and
b) from 0.5 to 3 wt.-% of the electrolyte composition an oxalate comprising compound,
an electrolyte composition comprising
a) from 5 to 10 wt.-% of the electrolyte composition a compound of general structure (I) in which R¹ and R² are independently methyl or ethyl and
b) from 1 to 2 wt.-% of the electrolyte composition an unsaturated carbonate,
an electrolyte composition comprising
a) from 5 to 10 wt.-% of the electrolyte composition a compound of general structure (I) in which R¹ and R² are independently methyl or ethyl and
b) from 0.5 to 2 wt.-% of the electrolyte composition an oxalate comprising compound,
an electrolyte composition comprising
a) from 5 to 10 wt.-% of the electrolyte composition dimethylphosphite and
b) from 1 to 2 wt.-% of the electrolyte composition an unsaturated carbonate,
an electrolyte composition comprising
a) from 5 to 10 wt.-% of the electrolyte composition dimethylphosphite and
b) from 1 to 2 wt.-% of the electrolyte composition an oxalate comprising compound,
an electrolyte composition comprising
a) from 5 to 10 wt.-% of the electrolyte composition dimethylphosphite and
b) from 1 to 3 wt.-% of the electrolyte composition vinylene carbonate,
an electrolyte composition comprising
a) from 5 to 10 wt.-% of the electrolyte composition dimethylphosphite and
b) from 0.1 to 1 wt.-% of the electrolyte composition lithium bis(oxalato) borate,
an electrolyte composition comprising
a) from 3 to 15 wt.-% of the electrolyte composition dimethylphosphite and
b) from 1 to 3 wt.-% of the electrolyte composition vinylene carbonate,
an electrolyte composition comprising
a) from 3 to 15 wt.-% of the electrolyte composition dimethylphosphite and
b) from 0.1 to 1 wt.-% of the electrolyte composition lithium bis(oxalato) borate.

The electrochemical performance is typically measured as the specific charge and discharge capacity in mAh/g with regard to the weight of the cathode material. In this case the corresponding anode should have an equal or higher capacity than the cathode such that the capacity of the cathode equals that of the complete battery. The higher the value for the capacity the better is the battery and thus its components such as the electrolyte composition. Normally, the charge and discharge capacity decreases with increased current density. The current density is typically given as the charge/discharge current in amperes divided by the total capacity of the battery in ampere hours. This ratio is often reported as C value. The better the electrolyte composition the less decreases the charge and discharge capacity with increasing current density. Furthermore, the better the electrolyte composition the lower is the decrease of capacity over repeated charge and discharge cycles. The decrease of the capacity is usually reported as percentage of the initial capacity.

The electrolyte composition according to the present invention is preferably liquid under conditions in which it is typically used. More preferably it is liquid at atmospheric pressure at a temperature between -40 °C and 120 °C, even more preferably it is liquid at atmospheric pressure at a temperature between -20 °C and 80 °C, in particular it is liquid at atmospheric pressure at a temperature between 0 °C and 50 °C.

Preferably, the electrolyte composition additionally comprises at least one aprotic organic solvent which is different from the at least one compound of general structure (I) and the at least one anode film forming additive. The solvent helps to dissolve any solid if present and/or improves the miscibility of ingredients in case they are not well miscible. Furthermore, it decreases the viscosity of the electrolyte composition rendering the electrolyte composition more conductive. Also, an aprotic organic solvent often decreases the price of the electrolyte composition. Aprotic in the context of the present invention means that the at least one organic solvent does not form hydrogen when brought in contact to elemental lithium at atmospheric pressure and a temperature between -15 °C and 80 °C. Formation of no hydrogen means that within one month less than 0.1 mol-% of hydrogen with regard to the at least one aprotic organic solvent is formed when the at least one aprotic organic solvent is in contact with elemental lithium under the formerly mentioned conditions.

Examples for aprotic organic solvents are cyclic and/or noncyclic carbonates, dialkylethers, polyethers, cyclic ethers, cyclic and/or noncyclic acetales and/or ketales, orthocarboxylic acids esters, and cyclic and/or noncyclic esters of carboxylic acids, or mixtures thereof. Carbonates are preferred.

Examples for cyclic carbonates are ethylene carbonate, propylene carbonate, and butylene carbonate. One or more of the hydrogen atoms of the alkylene group can be substituted by an alkyl group, preferably a C₁-C₄ alkyl group, including methyl, ethyl, n-propyl, iso-propyl, n-butyl, iso-butyl, sec.-butyl and tert.-butyl. Noncyclic carbonates are preferably independent of each other a C₁-C₁₀ alkyl group, more preferably independent of each other a C₁-C₄ alkyl group. Examples of noncyclic carbonates are dimethyl carbonate, ethylmethyl carbonate, diethyl carbonate, methyl-isopropyl carbonate, methyl-*sec*-butyl carbonate, methyl-*tert*-butyl carbonate, and ethyl-isopropyl carbonate.

According to the present invention it is particularly preferred if the electrolyte composition contains as aprotic organic solvent a mixture of at least one cyclic carbonate and at least one noncyclic organic carbonate. Such mixtures ensure high solubility of solids in the electrolyte composition if present and at the same time low viscosity of the electrolyte composition rendering it highly conductive. It is particularly preferred if the electrolyte composition contains ethylene carbonate and diethyl carbonate or ethylene carbonate and ethylmethyl carbonate. Preferably, the at least one cyclic carbonate and the at least one noncyclic carbonate are present in the electrolyte composition in a weight ratio from 8:2 to 2:8, more preferably from 7:3 to 3:7, in particular from 6:4 to 4:6.

Examples of suitable dialkylethers are dimethylether, ethylmethylether, diethylether, diisopropylether, and di-*n*-butylether.

Examples of suitable polyethers are polyalkylene glycols, preferably poly-C₁-C₄-alkylene glycols and especially polyethylene glycols. Polyethylene glycols may comprise up to 20 mol-% of one or more C₁-C₄-alkylene glycols in copolymerized form. Polyalkylene glycols are preferably dimethyl- or diethyl-end capped polyalkylene glycols. The molecular weights, preferably reported as weight averages, of suitable polyalkylene glycols and especially of suitable polyethylene glycols span a wide range. It may be as low as 90 g/mol for dimethoxyethane. On the other hand, the molecular weight of suitable polyalkylene glycols and especially of suitable polyethylene glycols may be up to 5 000 000 g/mol, preferably up to 2 000 000 g/mol.

Examples of suitable cyclic ethers are tetrahydrofurane and 1,4-dioxane.

Examples of suitable noncyclic acetals are 1,1-dimethoxymethane and 1,1-diethoxymethane. Examples for suitable cyclic acetals are 1,3-dioxane and 1,3-dioxolane.

Examples of suitable orthocarboxylic acids esters are tri-C₁-C₄ alkoxy methane, in particular trimethoxymethane and triethoxymethane.

Examples for suitable noncyclic esters of carboxylic acids are ethyl acetate, methyl butanoate, esters of dicarboxylic acids like 1,3-dimethyl propanedioate, dialkyl glutarates, dialkyl adipates, dialkyl succinates. Dimethyl glutarate is preferred. An example of a suitable cyclic ester of carboxylic acids (lactones) is γ-butyrolactone.

The at least one aprotic organic solvent according to the present invention is preferably present in at least 50 wt.-% of the electrolyte composition, more preferably at least 60 wt.-% of the electrolyte composition, in particular at least 70 wt.-% of the electrolyte composition.

Preferred examples of the electrolyte composition according to the invention include an electrolyte composition comprising from 50 to 80 wt.-% of the electrolyte composition a noncyclic carbonate, an electrolyte composition comprising from 50 to 80 wt.-% of the electrolyte composition a cyclic carbonate, an electrolyte composition comprising from 50 to 80 wt.-% of the electrolyte composition a dialkylether, an electrolyte composition comprising from 50 to 80 wt.-% of the electrolyte composition a polyether, an electrolyte composition comprising from 70 to 90 wt.-% of the electrolyte composition a noncyclic carbonate, an electrolyte composition comprising from 70 to 90 wt.-% of the electrolyte composition a cyclic carbonate, an electrolyte composition comprising from 70 to 90 wt.-% of the electrolyte composition a dialkylether, an electrolyte composition comprising from 70 to 90 wt.-% of the electrolyte composition a polyether, an electrolyte composition comprising from 50 to 90 wt.-% of the electrolyte composition a mixture of a cyclic and a noncyclic carbonate in a weight ratio from 8:2 to 2:8, an electrolyte composition comprising from 60 to 90 wt.-% of the electrolyte composition a mixture of a cyclic and a noncyclic carbonate in a weight ratio from 8:2 to 2:8, an electrolyte composition comprising from 70 to 90 wt.-% of the electrolyte composition a mixture of a cyclic and a noncyclic carbonate in a weight ratio from 8:2 to 2:8, an electrolyte composition comprising from 70 to 80 wt.-% of the electrolyte composition a mixture of a cyclic and a noncyclic carbonate in a weight ratio from 8:2 to 2:8, an electrolyte composition comprising from 50 to 90 wt.-% of the electrolyte composition a mixture of a cyclic and a noncyclic carbonate in a weight ratio from 6:4 to 4:6, an electrolyte composition comprising from 60 to 90 wt.-% of the electrolyte composition a mixture of a cyclic and a noncyclic carbonate in a weight ratio from 6:4 to 4:6, an electrolyte composition comprising from 70 to 90 wt.-% of the electrolyte composition a mixture of a cyclic and a noncyclic carbonate in a weight ratio from 6:4 to 4:6, an electrolyte composition comprising from 70 to 80 wt.-% of the electrolyte composition a mixture of a cyclic and a noncyclic carbonate in a weight ratio from 6:4 to 4:6.

Preferably the electrolyte composition according to the present invention further comprises at least one lithium salt. More preferably the at least one lithium salt is a monovalent salt, i.e. a salt with monovalent anions. Examples for lithium salts are LiPF₆, LiPF₃(CF₂CF₃)₃, LiClO₄, LiAsF₆, LiBF₄, LiCF₃SO₃, LiN(SO₂F)₂, Li₂SiF₆, LiSbF₆, LiAlCl₄, and salts of the general formula (CₙF₂ₙ₊₁SO₂)ₘXLi, where m and n are defined as follows:
m = 1 when X is selected from oxygen and sulfur,
m = 2 when X is selected from nitrogen and phosphorus,
m = 3 when X is selected from carbon and silicon, and
n is an integer in the range from 1 to 20,
like LiC(CₙF₂ₙ₊₁SO₂)₃ wherein n is an integer in the range from 1 to 20, and lithium imides such as LiN(CₙF₂ₙ₊₁SO₂)₂, where n is an integer in the range from 1 to 20.

Very preferred are LiPF₆, LiBF₄, or LiPF₃(CF₂CF₃)₃, or mixtures thereof, in particular LiPF₆.

The at least one lithium salt usually constitutes at least 0.01 wt.-% of the electrolyte composition, preferably at least 1 wt.-% of the electrolyte composition, and more preferred at least 5 wt.-% of the electrolyte composition. Typically the at least one lithium salt constitutes not more than 10 wt.-% of the electrolyte composition.

The electrolyte composition according to the present invention preferably comprises
a) from 3 to 15 wt.-% of the electrolyte composition at least one compound of general formula (I)
b) from 0.1 to 3 wt.-% of the electrolyte composition at least one anode film forming additive
c) from 0 to 96.9 wt.-% of the electrolyte composition at least one aprotic organic solvent
d) from 0 to 10 wt.-% of the electrolyte composition at least one lithium salt.

The components comprised in the electrolyte composition according to the present invention should be of high purity to avoid undesirable side reactions which decrease the electrochemical performance in batteries. In particular, compounds with acidic groups should be absent or substantially absent which means that the electrolyte composition should contain less than 50 ppm of these compounds. The term "ppm" denotes parts per million based on the weight of the electrolyte composition.

According to the present invention the electrolyte composition is preferably free or substantially free from water. Substantially free in the context of the present invention means that the electrolyte composition contains less than 50 ppm water. Preferably the electrolyte composition contains from 3 to 30 ppm water and in particular from 5 to 25 ppm water.

Various methods are known to the person skilled in the art to determine the amount of water present in the electrolyte composition. A well suited method is the direct titration according to Karl Fischer, for example described in detail in DIN 51777-1 part 1 (1983). Free of water normally means that the amount of water is below the detection limit of 3 ppm water.

The at least one compound of general structure (I) in the electrolyte composition according to the invention acts as flame retardant. Therefore the present invention also relates to the use of the compound of general structure (I) as flame retardant in electrolyte compositions, preferably in electrolyte compositions suitable for the use in batteries. The same details for the electrolyte composition as described above apply. The use of compound of general structure (I) in the electrolyte compositions in a battery comprising an anode with a reduction potential of 1 Volt or less against lithium is preferred. More preferably the battery comprises a lithium intercalating carbonaceous anode such as a lithium intercalating graphite anode. The same details for the battery as described below apply.

The electrolyte composition according to the present invention is particularly well suited for the use in batteries. Therefore, the present invention also relates to a battery comprising the electrolyte composition according to the present invention. Preferably, the battery according to the present invention is a lithium ion battery.

The battery according to the present invention normally comprises in addition to the electrolyte composition an anode. Examples are lithium intercalating carbonaceous anodes, such as an anode out of graphite, hard carbon or soft carbon, a lithium anode, a silicon anode, a lithium titanate anode, a tin-based anode, for example an amorphous tin-based composite oxide anode, an aluminum alloy anode, an anode from ternary metal vanadate alloyed with metals such as Al, Sn, and/or Sb, or metalloids such as Si, or intermetallic compounds as CoSn, Cu₆Sn₅, Cu₂Sb (e.g. microporous Cu₆Sn₅-Sn Anodes), metal/metalloid nanotubes, or an anode from silicone or nanomaterials such as hollow Fe₃O₄. Preferably, the battery according to the present invention comprises a lithium intercalating carbonaceous anode, in particular a graphite anode.

The battery according to the invention typically further comprises a cathode. Suitable cathode materials include crystalline lithium metal oxides and lithium metal phosphates. The metals are typically transition metals, for example Mn, Ti, Co, Ni, Cr, V, Cu, Zn, and/or Mo. Other metals like Mg, Ca, Al, As and/or Sb are also possible. Ni, Co, Mn, and/or Fe are preferred.

Examples for crystalline lithium metal oxides are LiMnO₂, LiCoO₂, and LiNiO₂. Lithium metal oxides can also contain several metals. Preferred are lithium metal oxides of the general formula (X) Li_{(1+z)}[NiₐCo_{b}Mn_{c}]_{(1-z)}O₂₊ₑ wherein z is 0 to 0.3; a, b and c may be the same or different and are independently from 0 to 0.8 wherein a + b + c = 1; and -0.1 ≤ e ≤ 0.1. Preferred are transition metal oxides with layer structure having the general formula (X) wherein z is from 0.05 to 0.3, a id from 0.2 to 0.5, b is from 0 to 0.3 and c is from 0.4 to 0.8 wherein a + b + c = 1; and -0.1 ≤ e ≤ 0.1. Preferred examples of lithium metal oxides of the general formula (X) are Ni_{0.33}Co₀Mn_{0.66}, Ni_{0.25}Co₀Mn_{0.75}, Ni_{0.35}Co_{0.15}Mn_{0.5}, Ni_{0,21}Co_{0,08}Mn_{0,71}, Ni_{0,22}Co_{0,12}Mn_{0,66}, and Ni_{0,21}Co_{0,08}Mn_{0,71}.

Examples for lithium metal phosphates are LiFePO₄, LiC_{O}PO₄, LiMnPO₄, LiNiPO₄, and Li₃V₂(PO₄)₃. It is also possible that the lithium metal phosphate contains more than one metal. Examples are LiFeₓMn₁₋ₓPO₄ or LiFeₓCo₁₋ₓPO₄ wherein 0 < x < 1. Usually, lithium metal phosphates are in an ordered olivine crystal structure. Due to their low electric conductivity, it is advantageous if lithium metal phosphate particles contain a conductive additive such as conductive carbon. Usually, the conductive additive is present from 1 to 5 wt.-% of the lithium metal phosphate.

The cathode according to the present invention may further comprise electrically conductive materials like electrically conductive carbon and other components like binders. Compounds suited as electrically conductive materials and binders are known to the person skilled in the art. For example, the cathode may comprise carbon in a conductive polymorph, for example graphite, carbon black, carbon nanotubes, grapheme, or mixtures thereof. In addition, the cathode may comprise one or more binders, for example one or more organic polymers like polyethylene, polyacrylonitrile, polybutadiene, polypropylene, polystyrene, polyacrylates, polyvinyl alcohol, polyisoprene and copolymers of at least two comonomers selected from ethylene, propylene, styrene, (meth)acrylonitrile and 1,3-butadiene, especially styrenebutadiene copolymers, and halogenated (co)polymers like polyvinlyidene chloride, polyvinly chloride, polyvinyl fluoride, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile, or mixtures thereof.

Furthermore, the cathode may comprise a current collector which may be a metal wire, a metal grid, a metal web, a metal sheet, a metal foil or a metal plate. A suitable metal foil is aluminum foil.

The cathode can have a thickness from 25 to 200 µm, preferably from 30 to 100 µm, based on the whole thickness of the cathode without the thickness of the current collector.

The anode and cathode according to the invention may be made by preparing an electrode slurry composition by dispersing the electrode active material, a binder, optionally a conductive material and a thickener, if desired, in a solvent and coating the slurry composition onto a current collector. The current collector may be a metal wire, a metal grid, a metal web, a metal sheet, a metal foil or a metal plate. Preferred the current collector is a metal foil, e.g. a copper foil or aluminum foil.

Typically, batteries according to the present invention comprise one or more separators by which the electrodes are mechanically separated. Suitable separators are polymer films, especially porous polymer films, which are unreactive toward metallic lithium. Particularly suitable materials for separators are polyolefins, especially porous polyethylene in film form and porous polypropylene in film form.

Separators made from polyolefin, especially made from polyethylene or polypropylene, may have a porosity in the range from 35 to 45 %. Suitable pore diameters are, for example, in the range from 30 to 500 nm.

It is also possible to select separators from polyethyleneterephthalate (PET) nonwovens filled with inorganic particles. Such separators may have a porosity in the range from 40 to 55 %. Suitable pore diameters are, for example, in the range from 80 to 750 nm.

Batteries according to present the invention may further comprise a housing which may have any desired shape, for example cuboidal or the shape of a cylindrical sheet. In one variant, the housing used is a metal foil elaborated as a pouch.

Batteries according to present the invention can be combined with one another, for example in series connection or in parallel connection. Series connection is preferred.

The batteries according to the present invention can be used in portable electric devices, such as power tools, cell phones, laptop computers. They can also be used for electric vehicles (EVs) including pure battery electric vehicles (BEVs), hybrid electric vehicles (HEVs), plug-in hybrid electric vehicles (PHEVs), and electric bicycles.

### Examples

All wt.-% given in the following examples mean weight percent of the electrolyte composition.

### Flammability tests

A 1 M solution of lithium hexafluorophosphate in a mixture of ethylenecarbonate (EC) and ethylmethylcarbonate (EMC) containing further ingredients according to table 1 are prepared. A Whatman glass filter (4.25 cm in diameter) is immersed in the electrolyte. After weighing the amount of electrolyte taken up by the filter, the filter is vertically hung up in a hood with controlled air flow rate. The electrolyte is ignited with a lighter and the burning time measured. This SET is recorded in seconds per gram of electrolyte in the filter.

**Table 1: Self-extinguishing time of different electrolyte compositions. The SET reduction corresponds to the SET of the respective electrolyte containing no compound of general formula (I), DMPi stands for dimethyl phosphite, TMP for dimethyl methylphosphite, and VC for vinylene-carbonate.**

| Example | EC-EMC | Compound of general structure (I) | anode film forming additive | SET (s/g) | SET reduction |
|---|---|---|---|---|---|
| 1 (comparative) | 1:1 | - | | 16.69 | - |
| 2 (comparative) | 1:1 | DMPi (5 wt.-%) | | 6.34 | 62 % |
| 3 (comparative) | 1:1 | TMP (15 wt.-%) | | 4.67 | 72 % |
| 4 (comparative) | 1:1 | - | VC | 17.36 | - |
| 5 (inventive) | 1:1 | DMPi (1.5 wt.-%) | VC | 16.02 | 4 % |
| 6 (inventive) | 1:1 | DMPi (3 wt.-%) | VC | 14.85 | 11 % |
| 7 (inventive) | 1:1 | DMPi (4 wt.-%) | VC | 10.18 | 39 % |
| 8 (inventive) | 1:1 | DMPi (5 wt.-%) | VC | 9.72 | 44 % |
| 9 (inventive) | | DMPi (6 wt.-%) | VC | 7.68 | 54 % |
| 10 (comparative) | 1:1 | TMP (15 wt.-%) | VC | 8.33 | 52 % |
| 11 (comparative) | 3:7 | - | | 16.51 | - |
| 12 (comparative) | 3:7 | DMPi (5 wt.-%) | | 8.97 | 46 % |
| 13 (comparative) | 3:7 | TMP (5 wt.-%) | | 12.62 | 24 % |

### Electrochemical performance

Button cells were fabricated using lithium nickel cobalt manganese oxide (NCM 111) electrodes with a capacity of 2 mAh/cm² and a graphite electrode with a capacity of 2.15 mAh/cm². A glass-fiber filter separator (Whatmann GF/D) was used as separator, which was soaked with 100 µl of the respective electrolyte composition. All electrochemical measurements were carried out at 25 °C in climate chambers. The discharge capacity of the cell was measured with regard to the cycling number according to the following procedure

**Table 2: Cyclization procedure to test the electrolyte composition in a battery.**

| Cycle | Charge-/discharge rate in C |
|---|---|
| 1-2 | 0.2 |
| 3-12 | 0.5 |
| 13-15 | 1 |
| 16-18 | 2 |
| 19-21 | 4 |
| 22-24 | 10 |
| 25-74 | 1 |

After cycle 74, the program from cycle 16 to 74 was repeated twice. Beginning from cycle 3 the cell is kept at the final charge potential of 4.2 V for half an hour.

**Table 3: Electrochemical measurements of the electrolyte compositions, VC stands for vinylenecarbonate, LiBOB for lithium bis(oxalato) borate.**

| Example | EC-EMC | Compound of general structure (I) | anode film forming additive | Capacity retention after 100 cycles based on 26^{th} cycle / % | 4C discharge capacity 20^{th} cycle / mAh g⁻¹ |
|---|---|---|---|---|---|
| 2 (comparative) | 1:1 | DMPi (5 wt.-%) | - | 0 | 0 |
| 3 (comparative) | 1:1 | TMP (15 wt.-%) | - | 0 | 0 |
| 10 (comparative) | 1:1 | TMP (15 wt.-%) | VC (2 wt.-%) | 0 | 0 |
| 12 (comparative) | 3:7 | DMPi (5 wt.-%) | - | 0 | 0 |
| 14 (comparative) | 3:7 | | VC (2 wt.-%) | 97.8 | 83 |
| 15 (inventive) | 3:7 | DMPi (5 wt.-%) | VC (2 wt.-%) | 90.0 | 79 |
| 16 (inventive) | 1:1 | DMPi (5 wt.-%) | LiBOB (0.5 wt.-%) | 97.9 | 68 |
| 17 (inventive) | 3:7 | DMPi (5 wt.-%) | LiBOB (0.5 wt.-%) | 98.3 | 89 |

## Claims

1. An electrolyte composition comprising
a) at least 3 wt.-% of the electrolyte composition of at least one compound of general structure (I) 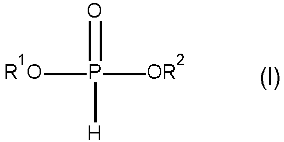 R¹ and R² are independent from each
other methyl, ethyl, *n*-propyl or *n*-butyl
and
b) at least one anode film forming additive.

2. The electrolyte composition according to claim 1, wherein the at least one anode film forming additive is at least one oxalate comprising compound.

3. The electrolyte composition according to claim 1 or 2, wherein the at least one anode film forming additive is lithium bis(oxalato) borate.

4. The electrolyte composition according to any of the claims 1 to 3, wherein the at least one compound of general formula (I) constitutes at least 5 wt.-% of the electrolyte composition.

5. The electrolyte composition according to any of the claims 1 to 4, wherein at least one aprotic organic solvent is additionally comprised.

6. The electrolyte composition according to claim 5, wherein the at least one aprotic organic solvent is at least one carbonate.

7. The electrolyte composition according to claim 5, wherein the at least one aprotic organic solvent is a mixture of at least one cyclic and at least one noncyclic carbonate.

8. The electrolyte composition according to any of the claims 1 to 7, wherein LiPF₆ is additionally comprised.

9. The electrolyte composition according to any of the claims 1 to 8, wherein the at least one compound of general formula (I) is dimethyl phosphite.

10. Use of the compound of general structure (I) as flame retardant in an electrolyte composition.

11. Use of the compound of general structure (I) as flame retardant according to claim 10, wherein the electrolyte composition is suitable for the use in batteries.

12. Use of the compound of general structure (I) as flame retardant according to claims 10 or 11, wherein the electrolyte composition additionally comprises at least one anode film forming additive.

13. Use of the compound of general structure (I) as flame retardant according to any of the claims 10 to 12, wherein the compound of general structure (I) constitutes at least 5 wt.-% of the electrolyte composition.

14. A battery comprising the electrolyte composition according to any of the claims 1 to 9.

15. The battery according to claim 14, wherein the battery comprises a lithium intercalating carbonaceous anode.

## Patentansprüche

1. Elektrolytzusammensetzung, umfassend
a) mindestens 3 Gew.-% der Elektrolytzusammensetzung von mindestens einer Verbindung der allgemeinen Struktur (I) 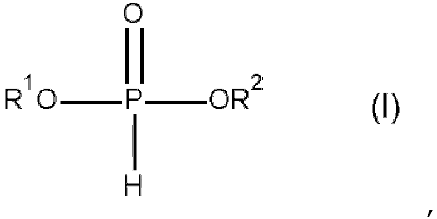 wobei R¹ und R² unabhängig voneinander Methyl, Ethyl, *n*-Propyl oder *n*-Butyl sind
und
b) mindestens ein anodenfilmbildendes Additiv.

2. Elektrolytzusammensetzung nach Anspruch 1, wobei das mindestens eine anodenfilmbildende Additiv mindestens eine Oxalat umfassende Verbindung ist.

3. Elektrolytzusammensetzung nach Anspruch 1 oder 2, wobei das mindestens eine anodenfilmbildende Additiv Lithiumbis(oxalato)borat ist.

4. Elektrolytzusammensetzung nach einem der Ansprüche 1 bis 3, wobei die mindestens eine Verbindung der allgemeinen Formel (I) mindestens 5 Gew.-% der Elektrolytzusammensetzung ausmacht.

5. Elektrolytzusammensetzung nach einem der Ansprüche 1 bis 4, wobei zusätzlich mindestens ein aprotisches organisches Lösungsmittel enthalten ist.

6. Elektrolytzusammensetzung nach Anspruch 5, wobei das mindestens eine aprotische organische Lösungsmittel mindestens ein Carbonat ist.

7. Elektrolytzusammensetzung nach Anspruch 5, wobei das mindestens eine aprotische organische Lösungsmittel ein Gemisch aus mindestens einem cyclischen und mindestens einem nichtcyclischen Carbonat ist.

8. Elektrolytzusammensetzung nach einem der Ansprüche 1 bis 7, wobei zusätzlich LiPF₆ enthalten ist.

9. Elektrolytzusammensetzung nach einem der Ansprüche 1 bis 8, wobei die mindestens eine Verbindung der allgemeinen Formel (I) Dimethylphosphit ist.

10. Verwendung der Verbindung der allgemeinen Struktur (I) als Flammschutzmittel in einer Elektrolytzusammensetzung.

11. Verwendung der Verbindung der allgemeinen Struktur (I) als Flammschutzmittel nach Anspruch 10, wobei die Elektrolytzusammensetzung für die Verwendung in Batterien geeignet ist.

12. Verwendung der Verbindung der allgemeinen Struktur (I) als Flammschutzmittel nach den Ansprüchen 10 oder 11, wobei die Elektrolytzusammensetzung zusätzlich mindestens ein anodenfilmbildendes Additiv umfasst.

13. Verwendung der Verbindung der allgemeinen Struktur (I) als Flammschutzmittel nach einem der Ansprüche 10 bis 12, wobei die Verbindung der allgemeinen Struktur (I) mindestens 5 Gew.-% der Elektrolytzusammensetzung ausmacht.

14. Batterie, umfassend die Elektrolytzusammensetzung nach einem der Ansprüche 1 bis 9.

15. Batterie nach Anspruch 14, wobei die Batterie eine Lithium-interkalierende kohlenstoffhaltige Anode umfasst.

## Revendications

1. Composition d'électrolyte comprenant
a) au moins 3 % en poids de la composition d'électrolyte d'au moins un composé de structure générale (I) 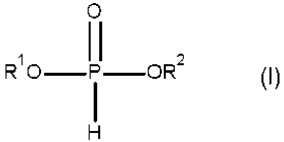 R¹ et R² sont, indépendamment l'un de l'autre, méthyle, éthyle, *n*-propyle ou *n*-butyle et
b) au moins un additif de formation de film d'anode.

2. Composition d'électrolyte selon la revendication 1, dans laquelle l'au moins un additif de formation de film d'anode est au moins un composé comprenant oxalate.

3. Composition d'électrolyte selon la revendication 1 ou 2, dans laquelle l'au moins un additif de formation de film d'anode est le bis(oxalato)borate de lithium.

4. Composition d'électrolyte selon l'une quelconque des revendications 1 à 3, dans laquelle l'au moins un composé de formule générale (I) constitue au moins 5 % en poids de la composition d'électrolyte.

5. Composition d'électrolyte selon l'une quelconque des revendications 1 à 4, dans laquelle au moins un solvant organique aprotique est également inclus.

6. Composition d'électrolyte selon la revendication 5, dans laquelle l'au moins un solvant organique aprotique est au moins un carbonate.

7. Composition d'électrolyte selon la revendication 5, dans laquelle l'au moins un solvant organique aprotique est un mélange d'au moins un carbonate cyclique et d'au moins un carbonate non cyclique.

8. Composition d'électrolyte selon l'une quelconque des revendications 1 à 7, dans laquelle LiPF₆ est également inclus.

9. Composition d'électrolyte selon l'une quelconque des revendications 1 à 8, dans laquelle l'au moins un composé de formule générale (I) est le phosphite de diméthyle.

10. Utilisation du composé de structure générale (I) en tant qu'agent ignifugeant dans une composition d'électrolyte.

11. Utilisation du composé de structure générale (I) en tant qu'agent ignifugeant selon la revendication 10, la composition d'électrolyte étant adaptée pour l'utilisation dans des batteries.

12. Utilisation du composé de structure générale (I) en tant qu'agent ignifugeant selon les revendications 10 ou 11, la composition d'électrolyte comprenant en outre au moins un additif de formation de film d'anode.

13. Utilisation du composé de structure générale (I) en tant qu'agent ignifugeant selon l'une quelconque des revendications 10 à 12, le composé de structure générale (I) constituant au moins 5 % en poids de la composition d'électrolyte.

14. Batterie comprenant la composition d'électrolyte selon l'une quelconque des revendications 1 à 9.

15. Batterie selon la revendication 14, la batterie comprenant une anode carbonée à lithium intercalaire.
